## Europäisches Patentamt
## European Patent Office
## Office européen des brevets

(11) Veröffentlichungsnummer: **0 036 612**
**B1**

(12) **EUROPÄISCHE PATENTSCHRIFT**

(45) Veröffentlichungstag der Patentschrift:
16.05.84

(51) Int. Cl.³: **A 47 J 39/02,** A 47 J 36/26

(21) Anmeldenummer: **81101971.0**

(22) Anmeldetag: **17.03.81**

(54) **Vorrichtung zum Erwärmen von in Behältnissen untergebrachten Nahrungsmitteln.**

(30) Priorität: **21.03.80 DE 3010889**

(43) Veröffentlichungstag der Anmeldung:
**30.09.81 Patentblatt 81/39**

(45) Bekanntmachung des Hinweises auf die Patenterteilung:
**16.05.84 Patentblatt 84/20**

(84) Benannte Vertragsstaaten:
**AT BE CH FR GB IT LI LU NL SE**

(56) Entgegenhaltungen:
**DE - A - 2 556 892**
**DE - U - 7 404 448**
**FR - A - 2 406 984**
**US - A - 2 453 425**
**US - A - 2 523 796**
**US - A - 3 495 583**

(73) Patentinhaber: **DEVAPPA Dr. Ing. R. Zinsser & Ing. K. Prestl, Starenstrasse 50, D-8420 Kelheim/Donau (DE)**

(72) Erfinder: **Dotterweich, Ewald, Hammerschmiedstrasse 13, D-8421 Essing (DE)**

(74) Vertreter: **Göbel, Matthias, Dipl.-Ing., Pruppacher Hauptstrasse 5-7, D-8501 Pyrbaum-Pruppach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Vorrichtung zum Erwärmen von in Behältnissen untergebrachten Nahrungsmitteln

Die Erfindung betrifft eine Vorrichtung zum Erwärmen von in Behältnissen untergebrachten Nahrungsmitteln, insbesondere Kindernahrung.

Bekannte Vorrichtungen dieser Art weisen ein durch eine elektrische Heizeinrichtung erwärmbares Wasserbad auf, in das die Behältnisse zum Erwärmen der in diesen untergebrachten Nahrungsmitteln einzustellen oder einzuhängen sind. Abgesehen davon, daß sich bei diesen Vorrichtungen durch Verdampfen Wasserverluste einstellen, was des öfteren nur zu Teilerwärmungen der Behältnisse führt, ist das verdampfte Wasser auch umständlich zu ersetzen. Außerdem zeigt sich, daß bei der Entnahme der Behältnisse Wasserteilchen anhaften, die als störend und unhygienisch empfunden werden. Der Benutzer der bekannten Vorrichtungen ist deshalb gezwungen durch Abtrocknen der Behältnisse die Wasserteilchen jeweils zu entfernen, was einen zusätzlichen Aufwand mit sich bringt. Es sind zwar Vorrichtungen bekannt, die als Wärmequelle ein Warmluftgebläse verwenden (US-A-24 53 425); diese Vorrichtungen zeigen aber den Nachteil, daß das Behältnis nicht gleichmäßig erwärmt wird und Wärmeverluste entstehen.

Es ist Aufgabe der Erfindung, eine Vorrichtung zu schaffen, die unter Ausschluß der Mängel der bekannten Vorrichtungen eine exakt vorbestimmte Erwärmung der Behältnisse insgesamt und der darin befindlichen Nahrungsmitteln ermöglicht.

Erfindungsgemäß ist dies durch ein Gehäuse erreicht, wie es im Anspruch 1 gekennzeichnet ist.

Es versteht sich, daß die Vorrichtung auch mehr als zwei Durchführungsöffnungen aufweisen kann, insbesondere zum Einsatz in Klinken od. dgl. Bei der so gebildeten Vorrichtung bedarf es eines einfachen Einsteckvorganges für die Behältnisse, die in der Vorrichtung über die Erwärmungszeiten trocken bleiben und der Vorrichtung trocken entnehmbar sind. Außerdem führt die Gebläseluftströmung innerhalb des Vorrichtungsgehäuses zu einer allseitigen und gleichmäßigen Erwärmung der Behältnisse. Zweckmäßig sind die Randflächen der Durchführungsöffnungen konzentrisch zur Mittellängsachse der Durchführungsöffnungen nach außen gebogen und durch die freien Randflächen der Kappen umfaßt.

In Ausgestaltung der Vorrichtung ist vorgesehen, als Warmluftgebläse einen Axiallüfter gemeinsam mit einem zugeordneten Heizregister zu verwenden. Der Axiallüfter und das Heizregister sind zweckmäßig an einer Platine angeordnet, die mit dem Gehäuseoberteil oder dem Gehäuseunterteil verbunden ist. Ein gegebenenfalls zusätzlich an der Platine angebrachtes, über den Axiallüfter und das Heizregister greifendes Schutzgitter vermindert die Verletzungsgefahr und bewirkt gleichzeitig ein breitgefächertes Verteilen der Abluft des Gebläses.

Es ist denkbar, daß die Zwischenräume der Gehäuseteile Luftkammern bilden bzw. zur Aufnehme von Isoliermaterial dienen. Schließlich sind zur Steuerung bzw. Regelung der Erwärmungstemperaturen am Gehäuseoberteil ein Temperaturregler und Schaltmittel für den Axiallüfter und das Heizregister vorgesehen. Außerdem kann ein in den Gehäuseunterteil frei einragender Temperaturfühler Anwendung finden, der mit dem Gehäuseoberteil oder dem Gehäuseunterteil verbunden ist.

Während längliche Behältnisse, z. B. Flaschen einfach über die Durchführungsöffnungen in die Vorrichtung einstellbar sind, ist für die Aufnahme von kurzen Behältnissen, z. B. Dosen, die Anordnung von konvergierenden Durchführungsöffnungen vorgesehen, in die die Dosen über eine Teillänge eingebracht in Richtung auf den enger werdenden Teil der Durchführungsöffnung verschoben und durch Klemmung gehalten sind.

Eine weitere Ausgestaltung der Vorrichtung ist dadurch erreicht, daß das Warmluftgebläse mittig im Gehäuseunterteil einragend ausgebildet ist und daß dem Warmluftgebläse allseitig im Abstand desselben im Gehäuseunterteil eine Vielzahl Behältnisse zugeordnet sind. Außerdem ist vorgesehen, daß die Durchführungsöffnungen durch eine gemeinsame Abdeckhaube übergriffen sind. Bei der so gebildeten Vorrichtung können nunmehr eine Vielzahl Behältnisse der erwärmten Abluftströmung ausgesetzt und erwärmt werden, wodurch die Vorrichtung insbesondere dort einsetzbar ist, wo eine größere Anzahl erwärmte Behältnisse gleichzeitig benötigt werden, wie in Krankenanstalten, Kinderheimen od. dgl. Zweckmäßig ist die Abdeckhaube im Gehäuseoberteil ansteckbar gehalten, wodurch die Behältnisse leicht zugänglich sind.

Es ist möglich die Abluftströmung des Gebläses zur Erwärmung der Behältnisse beliebig ungerichtet durch den Gehäuseunterteil hindurchzuführen. Eine besonders intensive und gleiche Erwärmung aller Behältnisse läßt sich jedoch dann erreichen, wenn der Gehäuseunterteil zu den Behältnissen führende Luftkanäle aufweist. Diese können bevorzugt von einem mittig im Boden des Gehäuseunterteils angeordneten, z. B. kegeligen Luftverteilungskörper ausgehen und z. B. durch radiale Einziehungen, Eindrückungen od. dgl. gebildet sein. Um die Standfestigkeit der Behältnisse im Gehäuseunterteil zu verbessern, ist noch vorgesehen, die Luftkanäle koaxial zu den Durchführungsöffnungen zur Bildung von Aufstellflächen für die Behältnisse mit Verbreiterungen zu versehen. Es ist auch denkbar, z. B. Behältnisse geringer Größe in einem Tragekorb einzustellen, der in die Durchführungsöffnungen einhängbar ist.

Schließlich sind noch Maßnahmen für die Zuleitung des Netzkabels zum Gebläse und den Schalt- und Regeleinrichtungen durch die Anordnung eines Zuführungskanals im Gehäuseoberteil vorgesehen.

Die Erfindung ist anhand von Ausführungsbeispielen in der Zeichnung erläutert. Hierin bedeutet

Fig. 1 eine Vorrichtung perspektivisch,
Fig. 2 eine Vorrichtung im Schnitt, verkleinert,
Fig. 3 ein Teilstück einer Vorrichtung im Bereich einer Durchführungsöffnung,
Fig. 4 eine Vorrichtung in Längsschnitt,
Fig. 5 einen Teilschnitt einer Vorrichtung,
Fig. 6 ein Gehäuseunterteil einer Vorrichtung in Draufsicht und
Fig. 7 einen Teilschnitt einer Vorrichtung mit einem Tragekorb für Behältnisse.

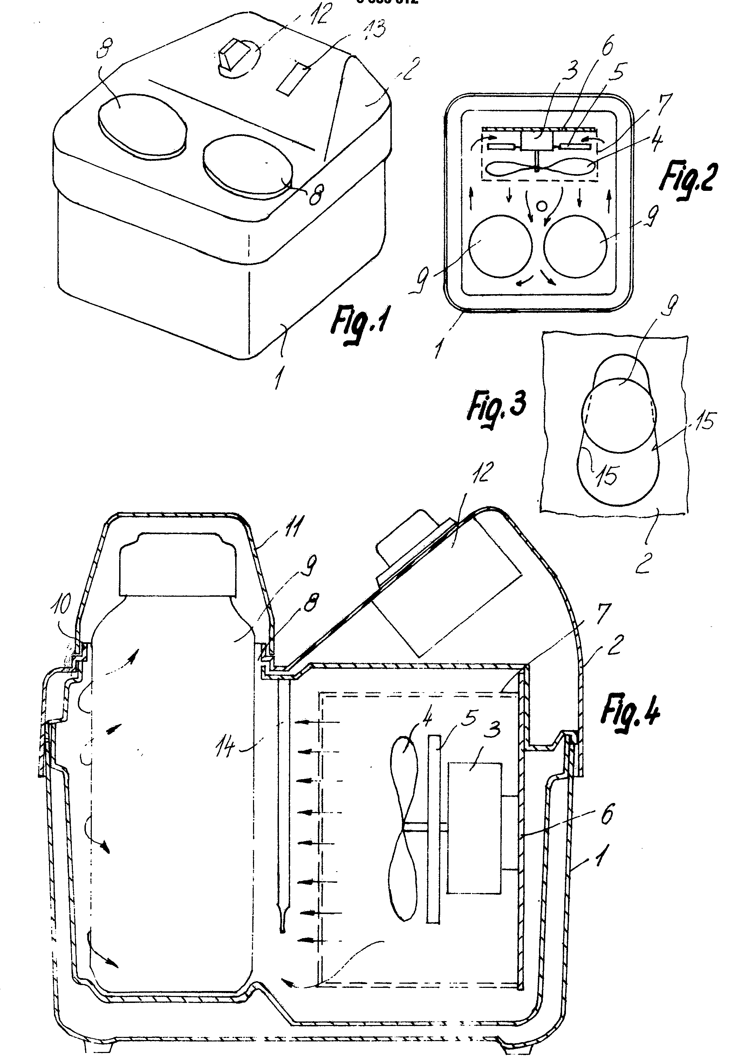

Mit 1 ist ein Gehäuseunterteil und mit 2 ein auf diesen aufsteckbarer Gehäuseoberteil bezeichnet. Beim Ausführungsbeispiel sind die Gehäuseteile 1 und 2 aus einem plastisch verformbaren Werkstoff hergestellt. Weiter sind die Gehäuseteile 1 und 2, wie insbesondere die Fig. 4 zeigt, doppelwandig ausgebildet. Der Gehäuseunterteil 2 nimmt ein Warmluftgebläse, bestehend aus einem Elektromotor 3 mit einem Flügelrad 4 und einem Heizregister 5 auf. Das Warmluftgebläse 3, 4 und das Heizregister 5 sind hierbei an einer Platine 6 angeordnet und durch ein Schutzgitter 7 übergriffen. Die Platine 6 ist mit dem Gehäuseoberteil 2 fest verbunden. Weiter weist der Gehäuseoberteil 2 zwei Durchführungsöffnungen 8 für Behältnisse 9 auf, über die die Behältnisse in den Unterteil 1 einstellbar sind. Die Randflächen 10 der Durchführungsöffnungen 8 sind nach außen gebogen und durch eine aufgesteckte Abdeckkappe 11 umfaßt. Weiter nimmt der Gehäuseoberteil 2 einen Drehschalter 12 zur Steuerung von Warmluftgebläse und Heizregister sowie eine Kontrolleuchte 13 auf. Mit 14 ist ein Temperaturregler bezeichnet, der am Gehäuseoberteil festgelegt ist.

Zum Erwärmen von Behältnissen mit den darin untergebrachten Nahrungsmitteln sind die Behältnisse über die Durchführungsöffnungen 8 in den Gehäuseunterteil 1 einzustellen und die Abdeckkappen 11 aufzubringen. Gleichzeitig ist mittels des Drehschalters 12 das Warmluftgebläse und das Heizregister an das Netz anzulegen. Die gebildete Luftströmung bewegt sich in Richtung der Behältnisse und um diese zur Erwärmung derselben.

In Fig. 3 ist eine Durchführungsöffnung 8 mit konvergierenden Randflächenabschnitten 15 vorgesehen. Die Durchtrittsöffnung ermöglicht eine klemmende Halterung von zwischen den Begrenzungsflächen eingeschobenen Behältnissen 9.

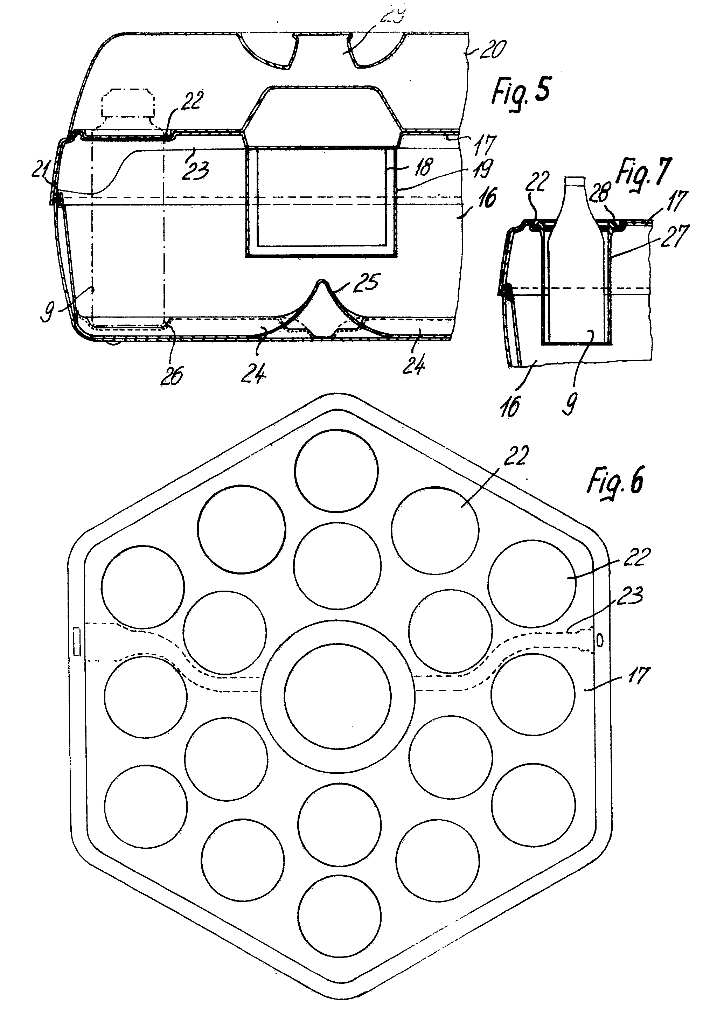

In den Fig. 5 bis 7 ist mit 16 ein topfförmiger Gehäuseunterteil bezeichnet, der einen Gehäuseoberteil 17 aufsteckbar trägt. Der Gehäuseunterteil 16 und der Gehäuseoberteil 17 sind, wie insbesondere in Fig. 5 erkennbar, doppelwandig ausgebildet. Am Gehäuseoberteil ist mittig ein Warmluftgebläse 18 angeordnet, das in den Gehäuseunterteil 16 einragt. Das Warmluftgebläse 18 kann durch ein Schutzgitter 19 umfaßt sein.

Die Oberseite des Gehäuseoberteils 17 ist durch eine aufsteckbare topfförmige Abdeckhaube 20 mit Griff 29 übergriffen, die mit Randflächen in eine Falz 21 des Gehäuseoberteils 17 eingreift. Im Gehäuseoberteil 17 sind eine Anzahl Durchführungsöffnungen 22 für die Nahrungsmittel aufnehmende Behältnisse 9 vorgesehen. Die Durchführungsöffnungen 22 sind bevorzugt versetzt zueinander ausgebildet. Am Gehäuseoberteil 17 ist weiterhin ein Kanal 23 für die Zuführung des Netzkabels zum Warmluftgebläse 18 und zu Schalt- und Regeleinrichtungen vorgesehen, zu deren Anbringung der Gehäuseoberteil ein ebenes Flächenstück im Umfangsbereich aufweist. In den Gehäuseunterteil 16 ist weiter ein Temperaturregler ausgebildet. Für die gleichmäßige Heranbringung der Abluftströmung des Warmluftgebläses 18 an die Behältnisse 9 sind im Bodenbereich des Gehäuseunterteils 16 Kanäle 24 vorgesehen, die an einen kegelförmigen Luftverteilungskörper 25 beginnend sich zu den Behältnissen 9 erstrecken.

Zum Erwärmen von Behältnissen 9 und den darin untergebrachten Nahrungsmitteln, sind die Behältnisse 9 nach zuvorigem Abnehmen der Abdeckhaube 20 über die Durchführungsöffnungen 22 in den Gehäuseunterteil 16 einzustellen. Die Behältnisse 9 stehen in koaxialen Verbreiterungen 26 und sind durch Zusammenwirken mit den Begrenzungsflächen der Durchführungsöffnungen 22 kippfrei gehalten. Nach dem Anlegen des Gebläses 18 an das Netz bewegt sich die Warmluftströmung entlang des Luftverteilungskörpers 25 durch die Kanäle 24 zu den Behältnissen 9 und von diesen an den Wandungen des Gehäuseunterteils 16 und des Gehäuseoberteils 17 zurück zum Warmluftgebläse.

In den Gehäuseoberteil 17 der Vorrichtung der Fig. 7 ist im Bereich einer Durchführungsöffnung 22 ein Tragekorb 27 frei eingehängt, der mit einer ringförmigen Verbreiterung 28 auf die Randflächen der Durchführungsöffnungen 22 aufliegt. Der Tragekorb 27 ermöglicht die Aufnahme und Halterung von Behältnissen 9 mit geringerer Größe.

**Patentansprüche**

1. Vorrichtung zum Erwärmen von in Behältnissen untergebrachten Nahrungsmitteln, insbesondere Kindernahrung, mit einem kastenförmigen Gehäuseunterteil (1, 16) und einem über die Offenseite desselben köcherförmig aufsteckbaren Gehäuseoberteil (2, 17), die einzeln oder gemeinsam ein Warmluftgebläse halten und dessen Gehäuseoberteil (2, 17) mindestens eine Durchführungsöffnung (8, 22) zum Einhängen oder Einstellen des Behältnisses (9) in den Gehäuseunterteil (1, 16) aufweist, dadurch gekennzeichnet, daß der Gehäuseunterteil (1, 16) und der Gehäuseoberteil (2, 17) durch jeweils zwei im Abstand lösbar zusammengesteckte Gehäuseteile doppelwandig ausgebildet sind und daß die Durchführungsöffnungen (8, 22) durch Abdeckkappen (11) einzeln bzw. durch eine Abdeckhaube (20) gemeinsam übergriffen sind.

2. Vorrichtung nach Anspruch 1, dadurch gekennzeichnet, daß als Warmluftgebläse ein Axiallüfter (3, 4) mit einem elektrischen Heizregister (5) dient, das mittels einer Platine (6) in den Gehäuseunterteil (1) einragend am Gehäuseoberteil (2) gehalten und durch ein mit der Platine (6) verbundenes Schutzgitter (7) übergriffen ist.

3. Vorrichtung nach Anspruch 1, dadurch gekennzeichnet, daß der Gehäuseunterteil (16) in der Bodenmitte innen einen kegeligen Luftverteilungskörper (25) und durch radiale Einziehungen oder Eindrückungen gebildete, zu den Behältnissen führende Luftkanäle (24) aufweist.

## Claims

1. Device for warming foodstuffs kept in receptacles, in particular baby food, with a box-shaped lower housing (1, 16) and a funnel-shaped upper housing (2, 17) which can be mounted over the open side of same, which, either separately or together, contains a hot air fan and whose upper housing (2, 17) has at least one orifice (8, 22) for suspending or positioning the receptacle (9) in the lower part of the housing (1, 16), characterized in that the lower part of the housing (1, 16) and the upper part of the housing (2, 17) are double-walled by virtue of two, respectively adjustable-distance parts of the housing which are attached to each other and that the orifices (8, 22) are overlapped individually by means of covers (11) or together by means of hood (20).

2. Device in accordance with claim 1, characterized in that an axial ventilator (3, 4) with an electrical heating radiator (5) serves as the hot air source, that by means of a mounting panel (6) in the lower part of the housing (1) extends at the upper part of the housing (2) and which is overlapped by a safety screen (7) which is connected to the mounting panel (6).

3. Device in accordance with claim 1, characterized in that the middle of the bottom of the lower part of the housing (16) has a conical air circulating fitting (25) and has air channels (24) formed by radial retractions or indents.

## Revendications

1. Dispositif pour réchauffer des aliments contenus dans des récipients, en particulier des aliments pour enfants, se composant d'une partie inférieure de boîtier en forme de boîte (1, 16) et d'une partie supérieure de boîtier (2, 17) en forme de couvercle emboîtable sur la face ouverte de ladite partie inférieure, qui enferment individuellement ou en commun, un ventilateur d'air chaud, et dont la partie supérieure du boîtier (2, 17) présente au moins une ouverture d'introduction (8, 22) permettant de suspendre ou de disposer le récipient (9) dans la partie inférieure (1, 16) du boîtier, caractérisé en ce que la partie inférieure du boîtier (1, 16) et la partie supérieure du boîtier (2, 17) sont conformées chacune à double paroi par deux parties de boîtier espacées et assemblées de façon dissociable et en ce que les ouvertures d'introduction (8, 22) sont recouvertes séparément par des couvercles (11) ou, en commun, par une coiffe (20).

2. Dispositif selon la revendication 1, caractérisé en ce que comme ventilateur d'air chaud, on utilise un ventilateur axial (3, 4) pourvu d'un registre chauffant (5) qui est porté, par l'intermédiaire d'une platine (6), par la partie supérieure du boîtier, de façon qu'il plonge dans la partie inférieure dudit boîtier (1), et est recouvert d'une grille protectrice (7) reliée à la platine (6).

3. Dispositif selon la revendication 1, caractérisé en ce que la partie inférieure du boîtier (1, 16) présente, sur le milieu du fond, intérieurement, un corps de distribution d'air (25) en forme de cône et des canaux d'air (24), formés de gorges ou d'empreintes radiales pour amener l'air jusqu'aux récipients.

Fig.1

Fig.2

Fig.3

Fig.4

Fig. 5

Fig. 7

Fig. 6